# EUROPEAN PATENT SPECIFICATION

(11) **EP 4 030 182 B1**
(45) Date of publication and mention of the grant of the patent: **07.05.2025**
(21) Application number: 20874043.1
(22) Date of filing: 29.05.2020
(51) Int. Cl.: G01S 7/282, H04B 17/345, H04B 17/382, G01S 7/00, G01S 7/04, G01S 13/34, G01S 13/931, G01S 7/02

(54) **TRANSMISSION CONTROL METHOD AND RELATED DEVICE**
ÜBERTRAGUNGSSTEUERUNGSVERFAHREN UND ZUGEHÖRIGE VORRICHTUNG
PROCÉDÉ DE COMMANDE DE TRANSMISSION ET DISPOSITIF ASSOCIÉ

(30) Priority: 11.10.2019 CN 201910965504
(43) Date of publication of application: 20.07.2022
(73) Proprietor: Shenzhen Yinwang Intelligent Technologies Co., Ltd., Shenzhen City, Guangdong 518129 (CN)
(72) Inventor: SONG, Sida, Shenzhen, Guangdong 518129 (CN); MA, Sha, Shenzhen, Guangdong 518129 (CN); GAO, Lei, Shenzhen, Guangdong 518129 (CN); WU, Qian, Shenzhen, Guangdong 518129 (CN)
(74) Representative: Gill Jennings & Every LLP
(86) International application number: PCT/CN2020/093118
(87) International publication number: WO 2021/068522

(56) References cited:
- EP-A1- 3 306 339
- WO-A1-2016/032780
- WO-A1-2017/019378
- CN-A- 105 549 021
- CN-A- 107 436 433
- CN-A- 109 633 653
- CN-A- 109 738 872
- CN-A- 109 932 722
- CN-A- 110 290 505
- US-A1- 2013 241 766

## Description

### TECHNICAL FIELD

This application relates to the field of radar technologies, and in particular, to a transmission control method and a related device.

### BACKGROUND

With the development of society, increasingly more machines in the modem life develop towards automation and intelligentization, and a vehicle used for mobile traveling is no exception. An intelligent vehicle is entering the daily life of people. In recent years, an ADAS (advanced driving assistant system) has played an important role in an intelligent vehicle, and uses various sensors installed on the vehicle, to sense a surrounding environment at any time when the vehicle is driving, collect data, identify, detect, and trace stationary and moving objects, and perform systematic operation and analysis in combination with navigator map data, so as to make a driver aware of possible risks in advance and effectively improve comfort and safety of vehicle driving. Therefore, real unmanned driving is an ultimate product of development of the ADAS. In an architecture of unmanned driving, a sensing layer is referred to as an "eye" of a vehicle, and includes a vision sensor such as an on-board camera and a radar sensor such as an on-board millimeter-wave radar, an on-board laser radar, and an on-board ultrasonic radar. The millimeter-wave radar has become a main sensor of an unmanned driving system due to low costs and a mature technology. Currently, the ADAS has developed more than ten functions, including adaptive cruise control (ACC), automatic emergency braking (AEB), lane change assist (LCA), and blind spot detection (BSD).

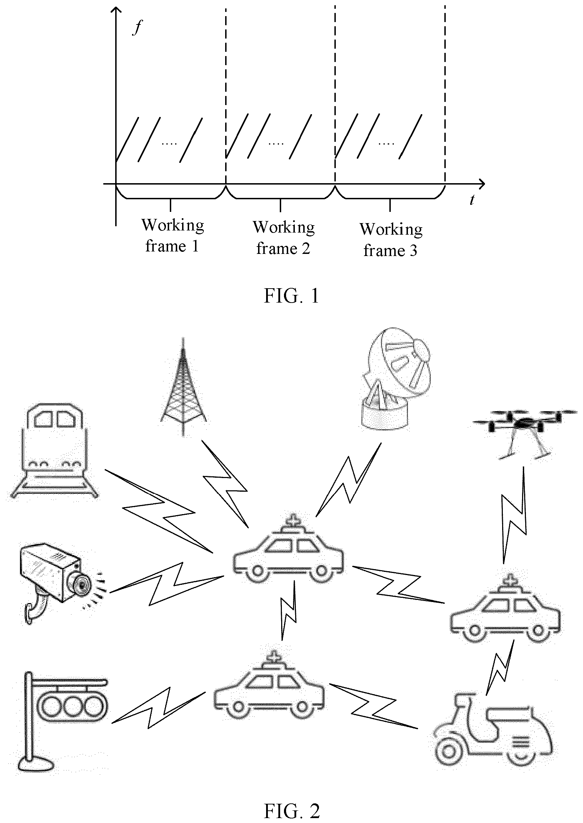

In the conventional technology, an on-board radar continuously transmits a signal during working. FIG. 1 is a schematic diagram in which an existing on-board radar transmits a signal. Each working frame includes a plurality of consecutive periodic signals and a plurality of consecutive idle times. Because of a relatively high duty cycle, the idle time actually occupies a relatively small proportion of time in an entire transmit frame. The working frames of the radar are consecutive. For example, a working frame 1 is followed by a working frame 2, and the working frame 2 is followed by a working frame 3. The existing on-board radar may occupy a spectrum resource for a long time.

Therefore, how to ensure that a plurality of radars evenly share resources as much as possible is a technical problem that needs to be resolved urgently.

EP 3 303 339 A1 discloses a vehicle radar system comprising at least one transceiver arrangement and at least one control unit. Each transceiver arrangement is arranged for generating and receiving FMCW, Frequency Modulated Continuous Wave, chirp signals in a radar frequency band, comprising ramps that each has a start frequency and a stop frequency. Said control unit is arranged to: control at least one transceiver arrangement to monitor a certain part of the radar frequency band during an observation period, analyze possible interference signals, identify a certain start time to start sending a cycle of one or more chirp signals in dependence of said analysis, such that interference from said interference signals is reduced.

WO 2016/032780 A1 discloses a method that includes a vehicle receiving data form an external computing device indicative of at least one other vehicle in an environment of the vehicle. The vehicle may include a sensor configured to detect the environment of the vehicle. The at least on other vehicle may include at least one sensor. The method also includes determining a likelihood of interference between the at least one sensor of the at least one other vehicle the sensor of the vehicle. The method also includes initiating an adjustment of the sensor to reduce the likelihood of interference between the sensor of the vehicle and the at least one sensor of the at least on other vehicle responsive to the determination.

US 2013/241733 A1 discloses a first radar transmitting section that periodically transmits a first radar transmission signal with a first transmission period based on a first transmission trigger signal product after elapse of a first delay time period from reception of a predetermined synchronization establishment signal by a first transmission trigger signal producing section. It discloses a second radar transmitting section that periodically transmits a second radar transmission signal with a second transmission period similarly.

CN 110 290 505 A discloses a method for assigning V2V link parameters in a predictable channel of a vehicle link. A channel prediction method based on traffic flow prediction is added to the vehicle system, and a backhaul cascade method of roadside units is used to predict the communication channel volume.

CN 109 932 722 A discloses a transceiver for a detection and ranging device, the transceiver comprising: a transmitter chain comprising a first sequence generator configured to generate a first signal based on a digital sequence, a first signal is used to mix with a carrier signal to provide a transmit signal; an interference cancellation block comprising a second sequence generator configured to generate a second signal based on the same digital sequence used to generate the first signal. The second signal has a predetermined time delay relative to the first signal, wherein the predetermined time delay is characteristic of an interfering signal expected to be received by a receiver chain of the transceiver; and a receiver chain configured to receive signals for detection.

### SUMMARY

Embodiments of this application provide a transmission control method and a related device, so as to ensure that a plurality of radars evenly share resources as much as possible and improve working efficiency of the radars.

According to a first aspect, an embodiment of this application provides a transmission control method. The method may include:
obtaining interference information, where the interference information is used to represent first information of a degree to which a first radar is interfered with on a first frequency band, wherein the interference information further comprises second information used to represent a degree to which the first radar is interfered with by another radar on a second frequency band, and the degree to which the first radar is interfered with on the second frequency band is higher than the degree to which the first radar is interfered with on the first frequency band;
selecting the first frequency band as the next transmit frequency band;
obtaining the interference information on the first frequency band; and
determining first transmission duration of the first radar on the first frequency band based on the interference information on the first frequency band, where the interference information on the first frequency band is used to indicate a difference between the first transmission duration and initial transmission duration of the first radar, or the interference information on the first frequency band is used to indicate the first transmission duration.

In embodiments of this application, the transmission duration corresponding to a high degree of interference is less than transmission duration corresponding to a low degree of interference, and controls the transmission duration of the first radar on the first frequency band based on the determined transmission duration. The transmission duration of the radar is controlled by using the interference information, and transmission duration of continuously occupying a resource is adjusted, so as to avoid a case in which one radar continuously occupies a frequency resource, and correspondingly control a length of the duration based on intensity of the interference. Therefore, it can be ensured that a plurality of radars evenly share resources, and interference is effectively avoided. This improves working efficiency of the radars.

The interference information includes a quantity of radars that are interfered with on the first frequency band. Both the quantity and the density information of radars that are interfered with can visually describe the degree to which the first radar is interfered with. This provides effective information for subsequently determining transmission duration.

In a possible implementation, the obtaining interference information includes: performing interference detection on the first frequency band to obtain the interference information; or receiving the interference information, where the interference information is from at least one second apparatus, and the second apparatus includes a second radar or a roadside unit. This implementation provides two manners of obtaining the interference information, including a manner of actively obtaining the interference information through interference detection and a manner of passively receiving the interference information by using a communications device. This can improve efficiency of obtaining the interference information.

In a possible implementation, the interference information belongs to a first interference range in a plurality of interference ranges, and the plurality of interference ranges are defined by using at least one interference threshold. In this implementation, a specific interference range that is in the plurality of interference ranges and to which the interference information belongs is determined, so as to determine the transmission duration of the first radar, thereby effectively avoiding interference from another radar, and ensuring fairness of resource sharing between a plurality of radars while satisfying a detection requirement of the first radar.

In a possible implementation, the at least one interference threshold is predefined or preconfigured. In this implementation, the plurality of interference ranges are determined by using the at least one preset interference threshold, so as to determine a specific interference range that is in the plurality of interference ranges and to which the interference information belongs, and determine the transmission duration of the first radar.

According to a second aspect, an embodiment of this application provides another transmission control method, including: sending interference information to a first apparatus, where the interference information includes first information used to represent a degree to which the first apparatus is interfered with on a first frequency band and the interference information comprises a quantity of radars that are interfered with on the first frequency band, wherein the interference information further comprises second information used to represent a degree to which the first radar is interfered with by another radar on a second frequency band, the degree to which the first radar is interfered with on the second frequency band is higher than the degree to which the first radar is interfered with on the first frequency band, wherein the first frequency band is selected as the next transmit frequency band and the interference information on the first frequency band is obtained; and the interference information on the first frequency band is used by the first apparatus to determine first transmission duration on the first frequency band.

In embodiments of this application, the interference information is sent to the first apparatus, to provide the interference information for the first apparatus, so as to determine the transmission duration of the first apparatus on the first frequency band. The transmission duration of the radar is controlled by using the interference information, and transmission duration of continuously occupying a resource is adjusted, so as to avoid a case in which one radar continuously occupies a frequency resource, and correspondingly control a length of the duration based on intensity of the interference. Therefore, it can be ensured that a plurality of radars evenly share resources, and interference is effectively avoided. This improves working efficiency of the radars.

The interference information includes a quantity of radars that are interfered with on the first frequency band. Both the quantity and the density information of radars that are interfered with can visually describe the degree to which the second apparatus is interfered with. This provides effective information for subsequently determining transmission duration.

According to a third aspect, an embodiment of this application provides a control apparatus, including:
an obtaining unit, configured to obtain interference information, where the interference information is used to represent first information of a degree to which a first radar is interfered with on a first frequency band, and the interference information comprises a quantity of radars that are interfered with on the first frequency band, wherein the interference information further comprises second information used to represent a degree to which the first radar is interfered with by another radar on a second frequency band, and the degree to which the first radar is interfered with on the second frequency band is higher than the degree to which the first radar is interfered with on the first frequency band, wherein the first frequency band is selected as the next transmit frequency band and the interference information on the first frequency band is obtained; and
a determining unit, configured to determine first transmission duration of the first radar on the first frequency band based on the interference information on the first frequency band, where the interference information on the first frequency band is used to indicate a difference between the first transmission duration and initial transmission duration of the first radar, or the interference information on the first frequency band is used to indicate the first transmission duration.

In embodiments of this application, the transmission duration corresponding to a high degree of interference is less than transmission duration corresponding to a low degree of interference, and controls the transmission duration of the first radar on the first frequency band based on the determined transmission duration. The transmission control apparatus controls the transmission duration of the radar by using the interference information, and adjusts transmission duration of continuously occupying a resource by the radar, so as to avoid a case in which one radar continuously occupies a frequency resource, and correspondingly control a length of the duration based on intensity of the interference. Therefore, it is ensured that a plurality of radars evenly share resources, and interference is effectively avoided. This improves working efficiency of the radars.

The interference information includes a quantity of radars that are interfered with on the first frequency band. Both the quantity and the density information of radars that are interfered with can visually describe the degree to which the first radar is interfered with. This provides effective information for subsequently determining transmission duration.

In a possible implementation, the first obtaining unit is further configured to perform interference detection on the first frequency band to obtain the interference information; or the obtaining unit specifically includes a receiving unit, configured to receive the interference information, where the interference information is from at least one second apparatus, and the second apparatus includes a second radar or a roadside unit. This implementation provides two manners of obtaining the interference information by the obtaining unit in the apparatus, including a manner of actively obtaining the interference information through interference detection and a manner of passively receiving the interference information by using a communications device. This can improve efficiency of obtaining the interference information.

In a possible implementation, the interference information belongs to a first interference range in a plurality of interference ranges, and the plurality of interference ranges are defined by using at least one interference threshold. In this implementation, a specific interference range that is in the plurality of interference ranges and to which the interference information belongs is determined, so as to determine the transmission duration of the first radar, thereby effectively avoiding interference from another radar, and ensuring fairness of resource sharing between a plurality of radars while satisfying a detection requirement of the first radar.

In a possible implementation, the at least one interference threshold is predefined or preconfigured. In this implementation, the plurality of interference ranges are determined by using the at least one preset interference threshold, so as to determine a specific interference range that is in the plurality of interference ranges and to which the interference information belongs, and determine the transmission duration of the first radar.

According to a fourth aspect, an embodiment of this application provides another control apparatus, including: a sending unit, configured to send interference information to a first apparatus, where the interference information includes first information used to represent a degree to which the first apparatus is interfered with on a first frequency band, the interference information further comprises a quantity of radars that are interfered with on the first frequency band.

The interference information includes a quantity of radars that are interfered with on the first frequency band. Both the quantity and the density information of radars that are interfered with can visually describe the degree to which the second apparatus is interfered with. This provides effective information for subsequently determining transmission duration. The interference information further comprises second information used to represent a degree to which the first radar is interfered with by another radar on a second frequency band, and the degree to which the first radar is interfered with on the second frequency band is higher than the degree to which the first radar is interfered with on the first frequency.

### BRIEF DESCRIPTION OF DRAWINGS

To describe technical solutions in embodiments or the background of this application more clearly, the following describes the accompanying drawings used in the embodiments or the background of this application.
FIG. 1 is a diagram of a principle of the conventional technology of a transmission control method according to another embodiment of this application;
FIG. 2 is a schematic diagram of an application scenario of a transmission control method according to an embodiment of this application;
FIG. 3 is a schematic diagram of a system architecture of a transmission control method according to an embodiment of this application;
FIG. 4 is a schematic flowchart of a transmission control method according to an embodiment of this application;
FIG. 5 is a schematic flowchart of another transmission control method according to an embodiment of this application;
FIG. 5A is a schematic diagram of application control of a transmission control method;
FIG. 5B is a schematic diagram of application control of a transmission control method;
FIG. 6 is a schematic diagram of a transmission control apparatus according to an embodiment of this application;
FIG. 7 is a schematic diagram of another transmission control apparatus according to an embodiment of this application;
FIG. 8 is a schematic diagram of a structure of another transmission control apparatus according to an embodiment of this application; and
FIG. 9 is a schematic diagram of an architecture of a transmission control system according to an embodiment of this application.

### DESCRIPTION OF EMBODIMENTS

The following describes the embodiments of this application with reference to the accompanying drawings in the embodiments of this application.

The terms "first", "second", "third", "fourth", "fifth", "sixth", "seventh", "eighth", and the like in the specification, claims, and accompanying drawings of this application are used to distinguish between different objects, and are not used to describe a specific sequence. In addition, the terms "include" and "have" and any variations thereof are intended to cover a non-exclusive inclusion. For example, a process, method, system, product, or device that includes a series of steps or units is not limited to the listed steps or units, but optionally further includes an unlisted step or unit, or optionally further includes another inherent step or unit of the process, method, product, or device.

"Embodiments" mentioned in the specification means that specific features, structures, or features described with reference to embodiments may be included in at least one embodiment of this application. The phrase shown in various locations in this specification may not necessarily refer to a same embodiment, and is not an independent or optional embodiment exclusive from another embodiment. It is explicitly and implicitly understood by a person skilled in the art that embodiments described in this specification may be combined with another embodiment.

The terms "component", "module", "system", and the like used in the specification are used to represent a computer-related entity, hardware, firmware, a combination of hardware and software, software, or software in execution. For example, the component may be, but is not limited to, a process, a processor, an object, an executable file, an execution thread, a program, and/or a computer running on a processor. As illustrated by using the figures, both a computing device and an application that runs on the computing device may be components. One or more components may reside in a process and/or an execution thread, and the components may be located on one computer and/or may be distributed between two or more computers. In addition, these components may be executed from various computer-readable media that store various data structures. The components may perform communication through a local and/or remote process, for example, based on a signal having one or more data packets (for example, data from two components that interact with another component between a local system, a distributed system, and/or a network, for example, the internet that interacts with another systems by using a signal).

It should be understood that the term "and/or" used in the specification and the appended claims means any combination of one or more of associated listed items and all possible combinations, and includes these combinations.

Some terms in this application are first described, to help a person skilled in the art have a better understanding.
(1) Millimeter-wave radar: A millimeter wave is an electromagnetic wave with a wavelength of 1 to 10 mm, and is characterized by a short wavelength and a wide frequency band. The millimeter wave easily implements a narrow beam, has a high radar resolution, and is not susceptible to interference. The millimeter-wave radar is a high-precision sensor for measuring a relative distance, a relative speed, and a direction between measured objects. The millimeter-wave radar is used in the military field in an early period. With development and progress of radar technologies, the millimeter-wave radar sensor is used in a plurality of fields such as automotive electronics, drones, and intelligent transportation. During application of an on-board millimeter-wave radar, the millimeter-wave radar is installed on a vehicle to obtain a distance, an angle, and a relative speed between measured objects from the radar through measurement. The millimeter-wave radar can implement advanced driving assistant system (ADAS) functions such as adaptive cruise control (adaptive cruise control), forward collision avoidance warning (forward collision warning), blind spot detection (blind spot detection), parking assist (parking aid), lane change assist (lane change assistant), and adaptive cruise control (ACC). A 24 GHz radar system mainly implements a short-range radar (SRR), and a 77 GHz system mainly implements a long-range radar (LRR).
   The millimeter-wave radar emits a millimeter wave through an antenna, receives a target reflection signal, and quickly and accurately obtains physical environment information around a vehicle body (such as a relative distance, a relative speed, an angle, and a movement direction between a vehicle and another object) after rear processing. Then, the millimeter-wave radar performs target tracing and identification classification based on detected object information, and further performs data fusion with reference to dynamic information of the vehicle body. Finally, the millimeter-wave radar performs intelligent processing through a central processing unit (ECU). After a proper decision is made, a driver is notified or warned in various manners, such as sound, light, and tactile sense, or the vehicle is actively intervened in time, thereby ensuring safety and comfort of a driving process, and reducing an accident occurrence probability.
(2) V2X: Vehicle-to-everything, that is, vehicle-to-everything information exchange. By integrating a global positioning system (GPS) navigation technology, a vehicle-to-vehicle communications technology, a wireless communications technology, and a remote sensing technology, vehicle-to-everything establishes a new development direction of vehicle technologies, and implements compatibility between manual driving and self-driving. It implements communication between a vehicle and a vehicle, between a vehicle and a base station, and between a base station and a base station. In this way, a series of traffic information such as a real-time road condition, road information, and pedestrian information can be obtained. This improves driving safety, reduces congestion, improves traffic efficiency, provides in-vehicle infotainment information, and the like. In addition, by using an in-vehicle sensor and a camera system, a surrounding environment may be further perceived to perform rapid adjustment, so as to implement "zero traffic accident". For example, if a pedestrian suddenly appears, the vehicle can automatically slow down to a safe speed or stop.
(3) Co-channel interference: The co-channel interference means that a carrier of an unwanted signal is the same as that of a wanted signal, and interference is caused to a receiver that receives a co-channel wanted signal.
(4) Roadside unit: The roadside unit is a static device, and may be independently deployed on two sides of a road or installed with a signal light, and is used for large-area sensing and communication. By using the roadside unit, a vehicle may access data stored in the roadside unit or upload data of the vehicle. The roadside unit collects vehicle safety information sent by an on board unit, and forwards the vehicle safety information to a road monitoring center. After summarizing safety information of each vehicle, the road monitoring center can monitor a road condition of the entire road and a running status of each vehicle. In addition, after receiving the road safety information sent by the road monitoring center, the roadside unit broadcasts the road safety information to vehicles on the road. The roadside unit uses the same mobile communications technology as the on board unit, and needs to communicate with the road monitoring center. In terms of function and structure, the roadside unit may be considered as a gateway in a heterogeneous network.

In addition, to facilitate understanding of the embodiments of the present invention, and the following specifically analyzes technical problems that need to be resolved in the embodiments of the present invention and corresponding application scenarios. In a process of radar transmission control, the following two solutions are usually used:
Solution 1: When an existing radar works, a transmit signal is continuously transmitted. As shown in FIG. 1, each working frame includes a plurality of consecutive periodic signals and a plurality of consecutive idle times. Because of a relatively high duty cycle, the idle time actually occupies a relatively small proportion of time in an entire transmit frame. The working frames of the radar are consecutive. For example, a working frame 1 is followed by a working frame 2, and the working frame 2 is followed by a working frame 3. However, the existing radar occupies a spectrum resource for a long time. This causes resource use unfairness. In a future case of high radar penetration, fairness and rationality of resource use are keys to ensure that the radar works normally without being affected by severe mutual interference in a full scenario.
Solution 2: A controller controls a controllable attenuator to generate different attenuation to attenuate a detection signal transmitted by a transmitter, so that a radar device separately works in a normal working state and an interference detection working state. In the interference detection working state, the controller determines an interference signal based on a dial-back signal received by a receiver, adjusts the detection signal of the transmitter based on the interference signal, and adjusts transmit power, a frequency band, or a modulation scheme of the detection signal, so as to avoid interference between different radar devices in a same area. However, in this implementation, the adjusted transmit power, frequency band, or modulation scheme can be used only in a next transmission period. In addition, in a process of determining the transmit power, the frequency band, or the modulation scheme, an example trial and error manner is used, and efficiency is not high.

Therefore, for the foregoing technical problem, a main problem to be resolved in this application is how to adjust, for different interference information, transmission duration of continuously occupying a same spectrum resource by a radar system, so that fairness of resource sharing between a plurality of radars is ensured on a same available frequency resource.

The following lists examples of scenarios to which a transmission control method in this application is applied. As shown in FIG. 2, a radar may be installed on a motor vehicle, a drone, a railcar, a bicycle, a signal light, a speed measurement apparatus, a base station, or the like. These radars may transmit electromagnetic waves on a same frequency band or different frequency bands. This application is applicable to a radar system between vehicles, a radar system between a vehicle and another apparatus such as a drone, or a radar system between other apparatuses. This application sets no limitation on a location and a function of the radar.

It may be understood that the foregoing application scenarios are merely example implementations in embodiments of this application, and application scenarios in embodiments of this application include but are not limited to the foregoing application scenarios.

With reference to an architecture of a transmission control system provided in this application and a procedure of a transmission control method provided based on the architecture of the transmission control system, the following specifically analyzes and resolves the technical problems in the foregoing solutions.

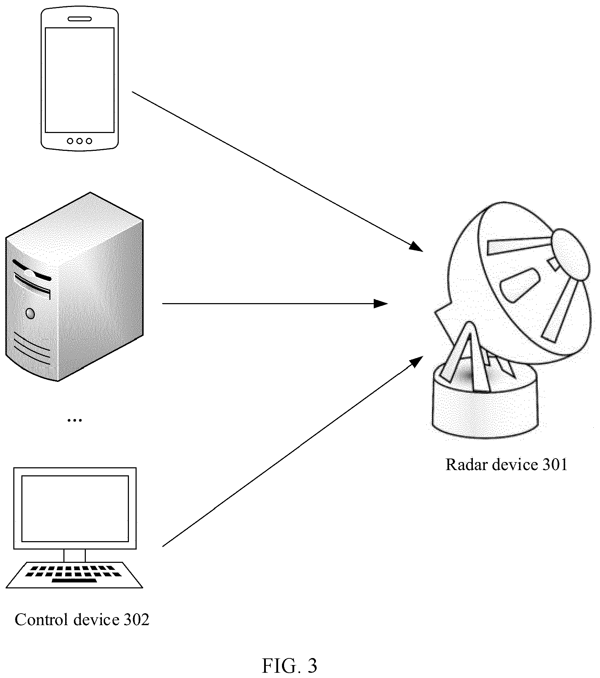

FIG. 3 is a schematic diagram of an architecture of a transmission control system according to an embodiment of this application. In an application scenario of transmission control, the system may include a radar device 301 and a control device 302. The radar device 301 and the control device 302 may communicate with each other in a wired or wireless manner or in another communication manner. The control device 302 may alternatively be installed on or integrated into the radar device 301. In this system, the radar device 301 bears a function of transmitting an electromagnetic wave by a radar, and the control device 302 is mainly configured to control transmission duration of the radar, and may further control transmit power, a frequency band, a modulation scheme, and the like of the radar.

As shown in FIG. 3, the radar device 301 is an electronic device that detects a target by using an electromagnetic wave. The radar transmits the electromagnetic wave to irradiate the target, and receives an echo of the target, to obtain information such as a distance from the target to a transmission point of the electromagnetic wave, a distance change rate (radial speed), a direction, and a height. The radar may include an early warning radar, a search alert radar, a guidance command radar, a gun targeting radar, a height measurement radar, a battlefield surveillance radar, an airborne radar, a radio height measurement radar, a radar fuze, a meteorological radar, a navigation control radar, a navigation radar, and a radar for collision avoidance and identification of friend or foe. The radar device 301 may be installed on a motor vehicle, a drone, a railcar, a bicycle, a signal light, a speed measurement apparatus, a base station, or the like. When the radar device 301 is an on-board radar (which is installed on a vehicle, and is usually an on-board millimeter-wave radar), the radar device 301 continuously occupies a frequency band to transmit an electromagnetic wave.

The control device 302 may be a server device, a communications terminal, a mobile device, a user terminal, a mobile terminal, a wireless communications device, a portable terminal, a user agent, a user apparatus, or the like, and is mainly used for data input, processing result output or display. Alternatively, the control device 302 may be a software client or an application installed or run on any one of the foregoing devices. When the radar device 301 is an on-board radar, the radar device 301 continuously occupies a frequency band to transmit an electromagnetic wave, and the control device 302 obtains interference information on the frequency band. The interference information includes a quantity information of other radars that use the frequency band or a frequency band near the frequency band at the same time. The interference information may be obtained actively or passively. The control device 302 determines, based on the obtained interference information, transmission duration of the radar device 301 on a frequency band, and controls duration of transmitting an electromagnetic wave by the radar device 301 on a frequency band.

It may be understood that the system architecture in FIG. 3 is merely an example implementation of embodiments of the present invention, and the system in embodiments of the present invention includes but is not limited to the foregoing system architecture.

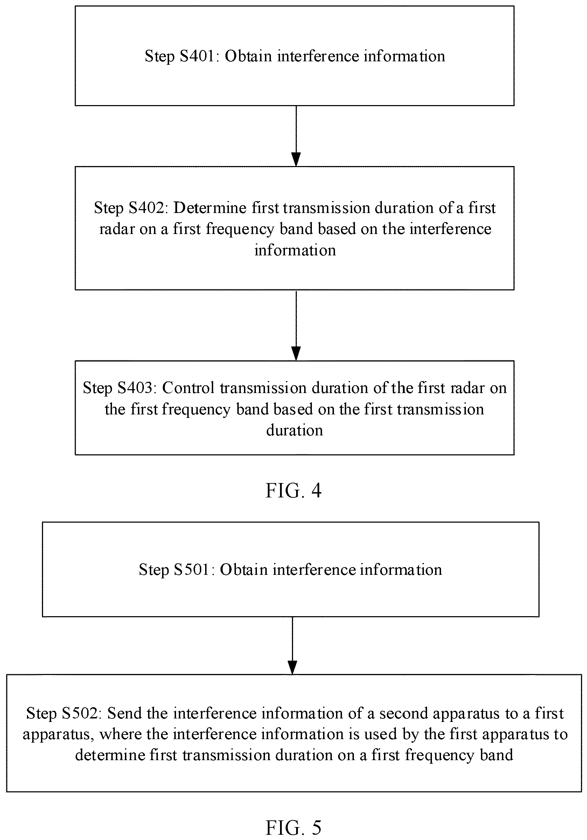

FIG. 4 is a schematic flowchart of a transmission control method according to an embodiment of this application. The method may be applied to the system in FIG. 3. With reference to FIG. 4, the following uses an example in which an execution body is the control device 302. The control device 302 may be a part of the radar device 301 and is described from a unilateral side of the control device 302. In the transmission control method, the control device may be a part of a first radar. The method may include step S401 to step S403.

Step S401: Obtain interference information.

Specifically, the control device obtains the interference information of the first radar, where the interference information is used to represent first information of a degree to which the first radar is interfered with on a first frequency band. A source of the interference may be another radar or a roadside unit, or may be another device that transmits an electromagnetic wave.

The interference information includes a quantity information of interfering radars on the first frequency band, or radar information of the interfering radar (for example, at least a quantity of interfering radars, and optionally a location, a transmit frequency, and transmission duration of the interfering radar). A larger quantity or a higher density of interfering radars indicates a stronger degree of interference. Both the quantity and the density information of radars that are interfered with can visually describe the degree to which the first radar is interfered with. This provides effective information for subsequently determining transmission duration. The following lists two manners of obtaining the interference information. The two manners include a manner of actively obtaining the interference information through interference detection and a manner of passively receiving the interference information by using a communications device. This can improve efficiency of obtaining the interference information.

Manner 1: The control device performs interference detection on the first frequency band to obtain the interference information. Specifically, that the control device obtains the interference degree through listening by the control device may be that a frequency band of a to-be-transmitted signal is adjusted to a frequency range of a detection sub-band, and a receiver on the control device mixes a signal received on the detection sub-band with the to-be-transmitted signal, and then performs energy detection after processing is performed by an intermediate frequency filter. An energy detection result is compared with a preset value, to determine a degree of density of interfering radars on the detection sub-band, and the interference information is obtained by using a listening result. The detection sub-band is a frequency domain granularity of radar listening, and the interference information herein includes density information of interfering radars. For example, that the control device obtains the interference degree through listening by the control device may be that a frequency band of a to-be-transmitted signal is adjusted to a frequency range of a detection sub-band p, and a receiver on the control device mixes a signal received on the detection sub-band with the to-be-transmitted signal, and then performs energy detection after processing is performed by an intermediate frequency filter. An energy detection result is compared with a preset value Th1, to determine a degree of density of interfering radars on the detection sub-band p. When the energy detection result is greater than the preset value Th1, it indicates that the degree of the density of the interfering radars on the detection sub-band p is relatively high. When the energy detection result is less than the preset value Th1, it indicates that the degree of the density of the interfering radars on the detection sub-band p is relatively low.

Manner 2: The control device receives the interference information, where the interference information is from at least one second apparatus, and the second apparatus includes a second radar or a roadside unit. Specifically, a communications module of another second apparatus loads radar information to a wireless signal for transmission. The radar information includes at least one of a quantity of radars, a location of each radar, a transmit frequency band and transmission duration of each radar, and the like. The control device receives these signals by using the communications module at a receive end, to obtain radar information carried in the wireless signal through receiving and demodulation. The communications module may be a communications module built in the control device, or may be a communications module mounted on a vehicle (for example, V2X), to obtain surrounding radar information (a quantity, occupied time-frequency resource information, waveform information, and the like), and infer a degree of density of surrounding interfering radars. The interference information may alternatively be information sent by a roadside unit. The interference information includes information collected by the roadside unit, for example, a quantity of interfering radars, and a location, a frequency band, and transmission duration of the interfering radar, and the control device receives the interference information. In a V2X communication scenario, vehicles may communicate with each other by using a sidelink (sidelink, SL). SL communication is direct communication between vehicles, that is, communication between vehicles is direct communication in which no data is forwarded by using a network device. A vehicle and a network communicate with each other by using an uplink and a downlink. The uplink and the downlink are defined for a Uu interface for communication between a network device and a user, transmission from the network device to the user is downlink (downlink, DL) transmission, and transmission from the user to the network device is uplink (uplink, UL) transmission.

V2X sidelink communication includes two communication modes: A first communication mode is based on V2X direct communication scheduled by a network device, and means that a V2X user sends control information and data for V2X communication on a scheduled time-frequency resource based on scheduling information of the network device. The first communication mode is referred to as a mode 3 working mode. A second communication mode means that a V2X user selects, from available time-frequency resources included in a V2X communication resource pool, a time-frequency resource used for communication, and sends control information and data on the selected resource. The second communication mode is referred to as a mode 4 working mode. It should be noted that, for a scheduling request/scheduling grant in the mode 3 mode, the network device and the user still communicate with other by using the uplink and the downlink, and the vehicles directly communicate with each other by using the sidelink.

Step S402: Determine first transmission duration of the first radar on the first frequency band based on the interference information.

Specifically, after obtaining the interference information of the first radar on the first frequency band, the control device determines the first transmission duration of the first radar on the first frequency band based on the interference information. The interference information may have a correspondence with the first transmission duration of the first radar. When different interference degrees correspond to different transmission duration, transmission duration corresponding to a high interference degree is less than transmission duration corresponding to a low interference degree. It may be understood that the correspondence may be represented by a function formula, that is, one piece of interference information corresponds to one piece of transmission duration; or the correspondence may be represented by a preset interval, that is, a range of one piece of interference information corresponds to one piece of transmission duration, or a range of one piece of interference information corresponds to one piece of transmission duration.

The interference information may further indicate a difference between the first transmission duration and initial transmission duration of the first radar, or the interference information may further indicate the first transmission duration. The initial transmission duration may be a preset fixed value, or the initial transmission duration may be last transmission duration of the first transmission duration. Based on the interference information, the first transmission duration of the first radar on the first frequency band may be determined, or a difference between the first transmission duration of the first radar on the first frequency band and the last transmission duration or the initial transmission duration may be determined, to determine the first transmission duration of the first radar on the first frequency band. The first transmission duration may be maximum transmission duration. The control device determines maximum transmission duration of the first radar on the first frequency band based on the interference information. In an actual transmission process, the first transmission duration of the first radar on the first frequency band may not reach the maximum transmission duration.

In a possible implementation, the interference information belongs to a first interference range in a plurality of interference ranges, and the plurality of interference ranges are defined by using at least one interference threshold. The at least one interference threshold is predefined or preconfigured. That is, the at least one interference threshold is predefined, and the plurality of interference ranges are defined by using the at least one interference threshold. The obtained interference information is within one of the plurality of interference ranges. The interference threshold may be a threshold for defining upper and lower values of a range, or may be a threshold for segmenting a range.

For example, when the interference threshold is a threshold for defining upper and lower values of a range, an interference threshold for defining a first range is 0 and 3, that is, the first range includes 0 to 3 interfering radars, an interference threshold for defining a second range is 3 and 6, that is, the second range includes 3 to 6 interfering radars, and an interference threshold for defining a third range is 5 and 9, that is, the third range includes 5 to 9 interfering radars, where the interference information represents one of the three interference ranges. When the interference threshold is a threshold for segmenting a range, two interference thresholds are defined as 3 and 6, and there are three interference ranges, which may be 0 to 3 interfering radars, 3 to 6 interfering radars, and more than 6 interfering radars, where the quantity of interfering radars that is represented by the interference information falls into one of the three interference ranges. Because there may be a correspondence between the interference information and the transmission duration of the first radar, the interference information may further indicate a difference between the first transmission duration and the initial transmission duration of the first radar, or the interference information may further indicate the first transmission duration, that is, the first transmission duration of the first radar on the first frequency band may be determined by using the interference information.

In a possible implementation, if the interference information is within the first range, it is determined that the transmission duration of the first radar is first duration. If the interference information is within the second range, it is determined that the transmission duration of the first radar is second duration. A maximum value of the first range is greater than a maximum value of the second range, and a value of the first duration is less than a value of the second duration. The following lists two cases of a correspondence between interference information and transmission duration.

Case 1: A correspondence between a quantity or a density range of interfering radars in a plurality of pieces of interference information and transmission duration is preset. Ranges of the plurality of pieces of interference information do not overlap. The correspondence may be preset by a user, or may be preset in a standard or a protocol, or may be preset when a radar is delivered from a factory. This is not specifically limited herein. A quantity of interfering radars on the first frequency band in the interference information is used as an example. When the quantity of interfering radars is 0 to 3, the first transmission duration corresponding to the first radar on the first frequency band is 2s. When the quantity of interfering radars is 4 to 6, the first transmission duration corresponding to the first radar on the first frequency band is 1s. When the quantity of interfering radars is 7 to 9, the first transmission duration corresponding to the first radar on the first frequency band is 0.2s. When the quantity of interfering radars is more than 9, the first transmission duration corresponding to the first radar on the first frequency band is 0.1s. According to the correspondence, the first transmission duration of the first radar on the first frequency band may be clearly determined based on the interference information.

Case 2: A correspondence between a quantity of interfering radars in a plurality of pieces of interference information and transmission duration is preset. Ranges of the plurality of pieces of interference information partially overlap. The correspondence may be preset by a user, or may be preset in a standard or a protocol, or may be preset when a radar is delivered from a factory. This is not specifically limited herein. When the quantity of interfering radars is 0 to 3, the first transmission duration corresponding to the first radar on the first frequency band is 2s. When the quantity of interfering radars is 3 to 6, the first transmission duration corresponding to the first radar on the first frequency band is 1s. When the quantity of interfering radars is 5 to 9, the first transmission duration corresponding to the first radar on the first frequency band is 0.2s. When the quantity of interfering radars is more than 8, the first transmission duration corresponding to the first radar on the first frequency band is 0.1s. It may be learned that the four quantity ranges of interfering radars partially overlap. If the first transmission duration of the first radar on the first frequency band is currently 2s (that is, the interference information is within the range of 0 to 3), and if it is determined that a next transmit frequency band is the first frequency band, and it is detected that the quantity of interfering radars on the first frequency band is 3, although 3 also falls within the range of the transmission duration of 1s (that is, the quantity of interfering radars is 3 to 6), it is preferably considered that a current state is not changed, that is, 2s is still selected as the next transmission duration. This avoids frequent replacement of transmission duration of a radar, and saves resources. Optionally, when the first radar initially determines the transmission duration, because previous transmission duration does not exist as a reference, the initial transmission duration may be optionally a preset fixed value. Alternatively, if the obtained interference information falls within an overlapping area, the initial transmission duration is transmission duration corresponding to a range with relatively short duration or a range with relatively long duration.

Optionally, the method further includes step S403: Control transmission duration of the first radar on the first frequency band based on the first transmission duration.

Specifically, after determining the first transmission duration of the first radar on the first frequency band based on the first transmission duration based on the interference information, the control device controls the transmission duration of the first radar on the first frequency band based on the first transmission duration.

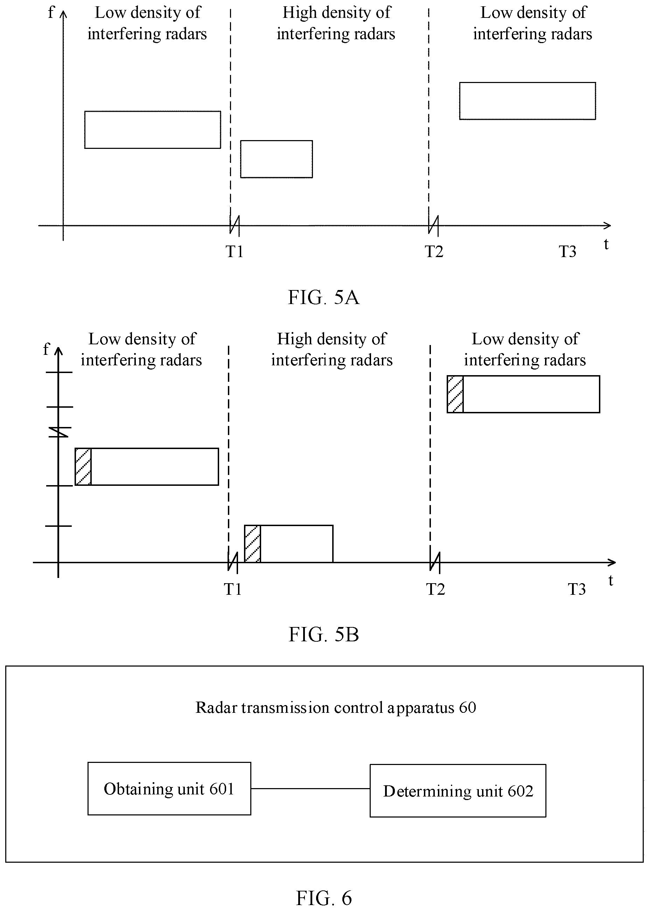

In a possible example helpful for understanding the invention but not covered by the claims, as shown in FIG. 5A, before a time period of 0 to T1, the radar learns that density of interfering radars on a frequency band 1 is relatively low. Therefore, transmission duration of continuously occupying a spectrum resource by the radar on the frequency band 1 in the time period of 0 to T1 is relatively long. However, before a time period of T1 to T2, the radar learns that density of interfering radars on a frequency band 2 is relatively high. Therefore, transmission duration of continuously occupying a spectrum resource by the radar on the frequency band 2 in the time period of T1 to T2 is relatively short. Before a time period of T2 to T3, the radar learns that density of interfering radars on a frequency band 3 is relatively low. Therefore, transmission duration of continuously occupying a spectrum resource by the radar on the frequency band 3 in the time period of T2 to T3 is relatively long. The time period of 0 to T1, the time period of T1 to T2, and the time period of T2 to T3 are of order of seconds. The spectrum resource may or may not change after each adjustment, that is, the frequency band 1, the frequency band 2, and the frequency band 3 may be the same or different. This depends on a policy and a capability of the radar. Herein, an example in which the spectrum resource changes after adjustment is used. During actual application, this is not limited.

In a time period in which the frequency band 1 is not occupied in 0 to T1, a time period in which the frequency band 2 is not occupied in T1 to T2, and a time period in which the frequency band 3 is not occupied in T2 to T3, the radar may select another frequency band for transmission. A manner of selecting another transmit frequency band may be the foregoing manner 1 or manner 2. Control of transmission duration may be that, regardless of a transmit frequency band, maximum transmission duration in 0 to T1 is relatively long. For example, in the time period of 0 to T1, it is determined that the transmission duration is 1/3 T1. In this case, in a time period of the remaining 2/3 T1, the radar may select another frequency band for transmission. In this case, it is not necessary to determine the transmission duration again, and after the frequency band is selected, transmission duration on the frequency band may also be 1/3 T1. Control of transmission duration may alternatively be that each frequency band corresponds to density of interfering radars on the frequency band, that is, transmission duration is determined by using different interference information, and corresponding maximum transmission duration is correspondingly different.

In a possible example, as shown in FIG. 5B, after determining the first frequency band, the control device first obtains the interference information on the first frequency band. A slashed-line area indicates a time at which the control device detects the first radar through listening or by using a communications module, to obtain a degree of density of surrounding interfering radars. In a time period of 0 to T1, it is learned, through listening, that density of interfering radars on a frequency band 1 is low, and therefore transmission duration of continuously occupying a spectrum resource by the radar on the frequency band 1 in the time period of 0 to T1 is relatively long. However, in a time period of T1 to T2, it is learned, through listening, that density of interfering radars on a frequency band 2 is relatively high, and therefore transmission duration of continuously occupying a spectrum resource by the radar on the frequency band 2 in the time period of T1 to T2 is relatively short. In a time period of T2 to T3, it is learned, through listening, that density of interfering radars on a frequency band 3 is low, and therefore transmission duration of continuously occupying a spectrum resource by the radar on the frequency band 3 in the time period of T2 to T3. The time period of 0 to T1, the time period of T1 to T2, and the time period of T2 to T3 are of order of seconds. The spectrum resource may or may not change after each adjustment, that is, the frequency band 1, the frequency band 2, and the frequency band 3 may be the same or different. This depends on a policy and a capability of the radar. Herein, an example in which the spectrum resource changes after adjustment is used, and the spectrum resource is one or more channels obtained through division. During actual application, this is not limited. In a time period in which the frequency band 1 is not occupied in 0 to T1, a time period in which the frequency band 2 is not occupied in T1 to T2, and a time period in which the frequency band 3 is not occupied in T2 to T3, the radar may select another frequency band for transmission. A manner of selecting another transmit frequency band may be the foregoing manner 1 or manner 2. Control of transmission duration may be that, regardless of a transmit frequency band, maximum transmission duration in 0 to T1 is relatively long. For example, in the time period of 0 to T1, it is determined that the transmission duration is 1/3 T1. In this case, in a time period of the remaining 2/3 T1, the radar may select another frequency band for transmission. In this case, it is not necessary to determine the transmission duration again, and after the frequency band is selected, transmission duration on the frequency band may also be 1/3 T1. Control of transmission duration may alternatively be that each frequency band corresponds to density of interfering radars on the frequency band, that is, transmission duration is determined by using different interference information, and corresponding maximum transmission duration is correspondingly different.

In conclusion, in the transmission control method in embodiments of this application, the interference information of the first radar on the first frequency band may be first obtained. The interference information represents the degree to which the first radar is interfered with on the first frequency band. A device determines the transmission duration of the first radar on the first frequency band based on the obtained interference information, where the interference information may indicate the difference between the transmission duration and the initial transmission duration of the first radar, or may directly indicate the transmission duration. Finally, the transmission duration of the first radar on the first frequency band is controlled by using the determined transmission duration, and the transmission duration of the radar is controlled by using the interference information, to adjust transmission duration of continuously occupying a resource, so as to avoid a case in which one radar continuously occupies a frequency resource, and correspondingly control a length of the duration based on intensity of the interference. This achieves fairness of resource sharing between a plurality of radars, and effectively avoids interference.

The following describes another transmission control method by using the second apparatus in the manner 2 of step S401 in the foregoing embodiment as an execution body. The second apparatus may be another radar or a roadside unit, or may be a control device of another radar or a control device of a roadside unit. In the transmission control method in this application, a first apparatus may be the first radar in embodiments of this application. As shown in FIG. 5, when the second apparatus is a control device of another radar, the method may include step S501 and step S502.

Step S501: Obtain interference information.

Specifically, the control device obtains the interference information of the second apparatus, and the interference information is used to represent a degree to which the second apparatus is interfered with on a first frequency band. For this step of obtaining interference information of the second apparatus, refer to the description of obtaining the interference information of the first radar in step S401 in the foregoing embodiment. Details are not described herein again.

Step S502: Send the interference information of the second apparatus to the first apparatus, where the interference information is used by the first apparatus to determine first transmission duration on the first frequency band.

Specifically, after obtaining the interference information of the second apparatus, the control device may control transmission duration of the second apparatus by using step S402 and step S403 in the foregoing embodiment. Then, the control device sends radar information of the control device to another apparatus (for example, the first apparatus or the first radar) by using a communications module or a V2X module. The radar information includes a quantity of radars of the second apparatus, and a location, a transmit frequency band, and transmission duration of the radar. The first radar is used as an example. The first radar receives radar information of the second apparatus, and determines, based on the received radar information, whether the second apparatus is an interfering radar. If a radar transmit frequency band of the second apparatus is the same as or similar to a radar transmit frequency band of the first radar, and transmission duration of the second apparatus and transmission duration of the first radar overlap, interference between the second apparatus and the first radar is relatively strong, and the radar information of the second apparatus is included in interference information of the first radar. The first radar obtains the interference information of the first radar based on one or more pieces of received radar information, where the interference information of the first radar represents a degree to which the first radar is interfered with on the first frequency band, and then performs step S402 and step S403 in the foregoing embodiment to control transmission duration of the first radar.

When the second apparatus is a control device of a roadside unit, the method may include step S502.

Step S502: Send the interference information of the second apparatus to the first apparatus, where the interference information is used by the first apparatus to determine first transmission duration of the first apparatus on the first frequency band.

Specifically, the control device collects radar information of a peripheral radar, and the radar information includes information such as a quantity of radars, and a location, a transmit frequency band, and transmission duration of each radar. The control device sends the interference information to the first apparatus after integration by using a V2X module, and the interference information is used to represent a degree to which the first apparatus is interfered with on the first frequency band. The first radar is used as an example. The first radar receives the degree to which the first apparatus is interfered with on the first frequency band, and then performs step S402 and step S403 in the foregoing embodiment to control transmission duration of the first radar.

In general, the transmission control method describes a process of providing the radar information of the second apparatus. In this way, the first radar determines the interference information by using the obtained radar information, to determine the transmission duration of the first radar by using the interference information. In this implementation, the second apparatus actively provides the interference information. The first radar controls the transmission duration of the first radar by using the interference information, and adjusts transmission duration of continuously occupying a resource, so as to avoid a case in which one radar continuously occupies a frequency resource, and correspondingly control a length of the duration based on intensity of the interference. This achieves fairness of resource sharing between a plurality of radars, and effectively avoids interference.

The foregoing describes the method in embodiments of this application in detail, and the following provides a related transmission control apparatus in embodiments of this application. The transmission control apparatus may be a terminal device, such as a radar, that has a computing function, may be connected to an intelligent terminal or various terminal devices, and exists in a form of a portable accessory. Alternatively, the transmission control apparatus may be a server device that has a computing function and may be connected to various devices, or may be an element in the foregoing device, for example, a chip. FIG. 6 is a schematic diagram of a transmission control apparatus according to an embodiment of this application. The transmission control apparatus 60 includes an obtaining unit 601 and a determining unit 602, and may further include a receiving unit 603.

The first obtaining unit 601 is configured to obtain interference information, where the interference information is used to represent first information of a degree to which a first radar is interfered with on a first frequency band.

The determining unit 602 is configured to determine first transmission duration of the first radar on the first frequency band based on the interference information, where the interference information is used to indicate a difference between the first transmission duration and initial transmission duration of the first radar, or the interference information is used to indicate the first transmission duration.

The interference information includes a quantity of radars that are interfered with on the first frequency band. Both the quantity and the density information of radars that are interfered with can visually describe the degree to which the first radar is interfered with. This provides effective information for subsequently determining transmission duration.

In a possible implementation, the obtaining unit 601 is further configured to perform interference detection on the first frequency band to obtain the interference information; or the obtaining unit 601 specifically includes a receiving unit 603, configured to receive the interference information, where the interference information is from at least one second apparatus, and the second apparatus includes a second radar or a roadside unit. This implementation provides two manners of obtaining the interference information by the obtaining unit in the apparatus, including a manner of actively obtaining the interference information through interference detection and a manner of passively receiving the interference information by using a communications device. This can improve efficiency of obtaining the interference information.

In a possible implementation, the interference information belongs to a first interference range in a plurality of interference ranges, and the plurality of interference ranges are defined by using at least one interference threshold. In this implementation, a specific interference range that is in the plurality of interference ranges and to which the interference information belongs is determined, so as to determine the transmission duration of the first radar, thereby effectively avoiding interference from another radar, and ensuring fairness of resource sharing between a plurality of radars while satisfying a detection requirement of the first radar.

In a possible implementation, the at least one interference threshold is predefined or preconfigured. In this implementation, the plurality of interference ranges are determined by using the at least one preset interference threshold, so as to determine a specific interference range that is in the plurality of interference ranges and to which the interference information belongs, and determine the transmission duration of the first radar.

It should be noted that, for functions of the function units in the transmission control apparatus 60 described in embodiments of this application, refer to related descriptions of step S401 to step S403 in the method embodiment described in FIG. 4. Details are not described herein again.

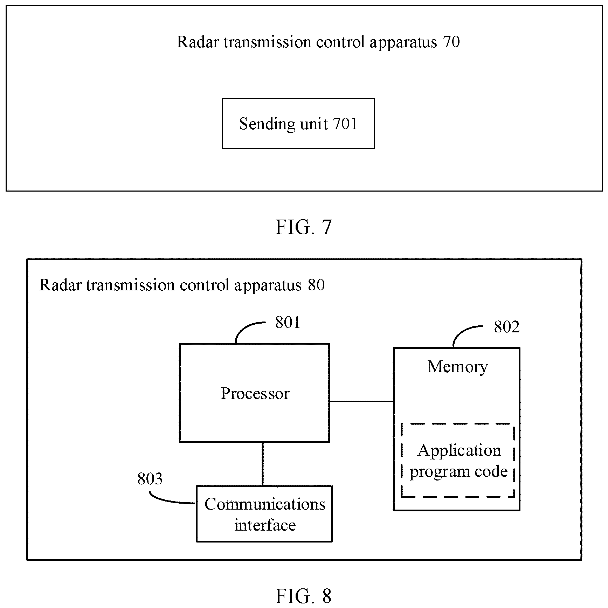

FIG. 7 is a schematic diagram of another transmission control apparatus according to an embodiment of this application. The transmission control apparatus 70 includes a sending unit 701.

The sending unit 701 is configured to send interference information to a first apparatus, where the interference information includes first information used to represent a degree to which the first apparatus is interfered with on a first frequency band, so that the first apparatus determines first transmission duration of the first apparatus on the first frequency band based on the interference information.

The interference information includes a quantity of radars that are interfered with on the first frequency band.

It should be noted that, for functions of the function units in the transmission control apparatus 70 described in embodiments of this application, refer to related descriptions of step S501 and step S502 in the method embodiment. Details are not described herein again.

FIG. 8 is a schematic diagram of a structure of another transmission control apparatus according to an embodiment of this application. The apparatus 80 includes at least one processor 801, at least one memory 802, and/or at least one communications interface 803. In addition, the device may further include common components such as an antenna. Details are not described herein again.

The processor 801 may be a general-purpose central processing unit (CPU), a microprocessor, an application-specific integrated circuit (application-specific integrated circuit, ASIC), or one or more integrated circuits configured to control execution of the foregoing solution program.

If the apparatus includes a communications interface 803, the communications interface is configured to communicate with another device or a communications network, such as the Ethernet, a radio access network (RAN), a core network, or a wireless local area network (wireless local area network, WLAN).

If the apparatus includes the memory 802, the memory may be a read-only memory (read-only memory, ROM) or another type of static storage device that can store static information and instructions, a random access memory (random access memory, RAM) or another type of dynamic storage device that can store information and instructions, or may be an electrically erasable programmable read-only memory (electrically erasable programmable read-Only memory, EEPROM), a compact disc read-only memory (compact disc read-only memory, CD-ROM) or another optical disk storage, an optical disk storage (including a compressed optical disk, a laser disk, an optical disk, a digital versatile optical disk, a Blu-ray disk, or the like), a magnetic disk storage medium, or another magnetic storage device, or any other medium that can be used to carry or store program code expected in a form of an instruction or a data structure and that can be accessed by a computer, but is not limited thereto. The memory may exist independently, and is connected to the processor through a bus. Alternatively, the memory may be integrated with the processor.

The memory 802 is configured to store application program code for executing the foregoing solution, and is controlled and executed by the processor 801. The processor 801 is configured to execute the application program code stored in the memory 802.

The code stored in the memory 802 may be configured to execute the foregoing transmission control method provided in FIG. 4, for example, obtain interference information, where the interference information is used to represent an interference degree of the first radar on the first frequency band. Determining transmission duration of the first radar on the first frequency band according to the interference information; and There is a correspondence between the interference information and transmission duration of the first radar. When different interference degrees correspond to different transmission duration, transmission duration corresponding to a high interference degree is less than transmission duration corresponding to a low interference degree. Controlling, according to the transmission duration, the transmission duration of the first radar on the first frequency band.

It should be noted that, for functions of the function units in the transmission control apparatus 80 described in embodiments of this application, refer to related descriptions of step S401 to step S403 in the method embodiment described in FIG. 4. Details are not described herein again. Alternatively, for functions of the function units in the transmission control apparatus 80 described in embodiments of this application, refer to related descriptions of step S501 and step S502 or step S503 in the foregoing method embodiment. Details are not described herein again.

The following provides a radar transmission control system related to an embodiment of this application.

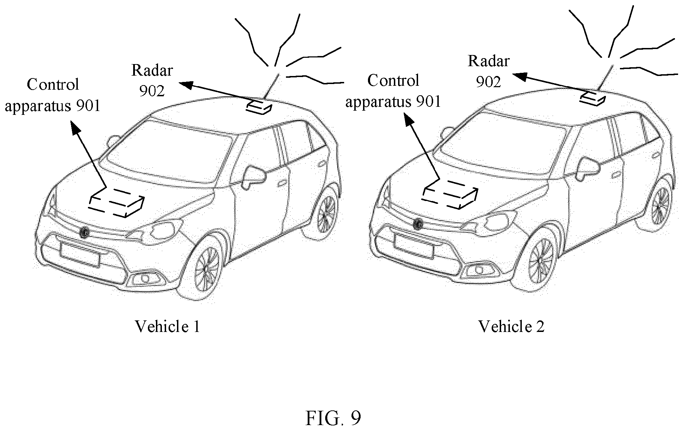

In a first optional design, as shown in FIG. 9, the radar transmission system may include a plurality of vehicles. An in-vehicle system of each vehicle includes at least one radar 902 and a control apparatus 901 (the control apparatus 901 may be the control apparatus provided in the foregoing embodiment of this application). The plurality of vehicles communicate with each other by using a communications module. The control apparatus 901 determines transmission duration of the radar 902 on a frequency band based on obtained interference information, and controls transmission duration of the radar 901 on the frequency band. The following uses FIG. 9 as an example to describe a radar transmission control process between two vehicles. A vehicle 1 first obtains interference information detected by the vehicle 1 or interference information sent by another vehicle, and determines a transmit frequency band and transmission duration of a radar 902 of the vehicle 1 based on the interference information by using a control apparatus 901 of the vehicle 1. Then, the vehicle 1 sends radar information (including a quantity of radars, and a location, a transmit frequency band, and transmission duration of the radar) of the vehicle 1 to a vehicle 2 by using a communications module. The vehicle 2 receives, by using a communications module, the radar information of the vehicle 1 that is sent by the vehicle 1. If a radar frequency band of the vehicle 1 is the same as or similar to a radar frequency band of the vehicle 2, and transmission duration of the vehicle 1 and transmission duration of the vehicle 2 overlap, radar interference between the vehicle 1 and the vehicle 2 is relatively strong. A control apparatus 901 of the vehicle 2 obtains the interference information, and determines a transmit frequency band and transmission duration of the radar 902 of the vehicle 2 based on the interference information.

In a second optional design, the radar transmission control system includes at least one radar and a control apparatus (the control apparatus 901 may be the control apparatus provided in the foregoing embodiment of this application), and the system may be disposed on a single vehicle.

In this optional design, the at least one radar 902 includes the control apparatus 901.

In this optional design, the radar transmission control system further includes a fusion apparatus and/or a central controller. The fusion apparatus is configured to process data and/or a signal from at least one sensor. The central controller is configured to control the vehicle based on detection information of the at least one sensor. Controlling the vehicle may be controlling driving of the vehicle or controlling a device integrated into the vehicle, such as braking or deceleration. Further, the fusion apparatus may be integrated into the central controller.

In still another optional design, an embodiment of this application provides a vehicle, and the vehicle includes the radar transmission control system in the second optional design. A sensor included in the vehicle may include at least one radar and/or at least one camera.

In the foregoing embodiments, descriptions of the embodiments have respective focuses. For a part that is not described in detail in an embodiment, refer to related descriptions in other embodiments.

It should be noted that, for brief description, the foregoing method embodiments are represented as a series of actions. However, a person skilled in the art should appreciate that this application is not limited to the described sequence of the actions, because some steps may be performed in another sequence or simultaneously according to this application. It should be further appreciated by persons skilled in the art that the embodiments described in this specification all belong to preferred embodiments, and the involved actions and modules are not necessarily required in this application.

In the several embodiments provided in this application, it should be understood that the disclosed apparatus may be implemented in other manners. For example, the described apparatus embodiments are merely examples. For example, division into the units is merely logical function division and may be other division in an actual implementation. For example, a plurality of units or components may be combined or integrated into another system, or some features may be ignored or not performed. In addition, the displayed or discussed mutual couplings or direct couplings or communication connections may be implemented through some interfaces. The indirect couplings or communication connections between the apparatuses or units may be implemented in an electrical form or another form.

The foregoing units described as separate parts may or may not be physically separate, and parts displayed as units may or may not be physical units, may be located in one position, or may be distributed on a plurality of network units. Some or all of the units may be selected based on actual requirements to achieve the objectives of the solutions of the embodiments.

In addition, functional units in the embodiments of this application may be integrated into one processing unit, or each of the units may exist alone physically, or two or more units are integrated into one unit. The integrated unit may be implemented in a form of hardware, or may be implemented in a form of a software function unit.

When the foregoing integrated unit is implemented in the form of a software functional unit and sold or used as an independent product, the integrated unit may be stored in a computer-readable storage medium. Based on such an understanding, the technical solutions of this application essentially, or the part contributing to the conventional technology, or all or some of the technical solutions may be implemented in a form of a software product. The computer software product is stored in a storage medium and includes several instructions for instructing a computer device (which may be a personal computer, a server, or a network device, and may be specifically a processor in the computer device) to perform all or some of the steps of the methods described in the embodiments of this application. The foregoing storage medium may include: any medium that can store program code, such as a USB flash drive, a removable hard disk, a magnetic disk, an optical disc, a read-only memory (read-only memory, ROM for short), or a random access memory (random access memory, RAM for short).

## Claims

1. A transmission control method, comprising:
obtaining interference information, wherein the interference information comprises first information used to represent a degree to which a first radar is interfered with on a first frequency band, and the interference information further comprises a quantity of radars (902) that are interfered with on the first frequency band, **characterized in that** the interference information further comprises second information used to represent a degree to which the first radar is interfered with by another radar (902) on a second frequency band, and the degree to which the first radar is interfered with on the second frequency band is higher than the degree to which the first radar is interfered with on the first frequency band;
selecting the first frequency band as the next transmit frequency band;
obtaining the interference information on the first frequency band, and
determining first transmission duration of the first radar on the first frequency band based on the interference information on the first frequency band, wherein the interference information on the first frequency band is used to indicate a difference between the first transmission duration and initial transmission duration of the first radar, or the interference information on the first frequency band is used to indicate the first transmission duration.

2. The method according to claim 1, wherein the obtaining interference information comprises:
performing interference detection on the first frequency band to obtain the interference information; or
receiving the interference information, wherein the interference information is from at least one second apparatus, and the second apparatus comprises a second radar or a roadside unit.

3. The method according to claim 1 or 2, wherein the interference information belongs to a first interference range in a plurality of interference ranges, and the plurality of interference ranges are defined by using at least one interference threshold.

4. The method according to claim 3, wherein the at least one interference threshold is predefined or preconfigured.

5. A transmission control method, comprising:
sending interference information to a first apparatus, wherein the interference information comprises first information used to represent a degree to which the first apparatus is interfered with on a first frequency band, the interference information further comprises a quantity of radars (902) that are interfered with on the first frequency band, **characterized in that** the interference information further comprises second information used to represent a degree to which the first radar is interfered with by another radar (902) on a second frequency band, the degree to which the first radar is interfered with on the second frequency band is higher than the degree to which the first radar is interfered with on the first frequency band, wherein the first frequency band is selected as the next transmit frequency band and the interference information on the first frequency band is obtained;
and the interference information on the first frequency band is used by the first apparatus to determine first transmission duration on the first frequency band.

6. A control apparatus (60, 70, 80, 901), comprising:
an obtaining unit (601), configured to obtain interference information, wherein the interference information is used to represent first information of a degree to which a first radar is interfered with on a first frequency band, and the interference information comprises a quantity of radars (902) that are interfered with on the first frequency band, **characterized in that** the interference information further comprises second information used to represent a degree to which the first radar is interfered with by another radar (902) on a second frequency band, and the degree to which the first radar is interfered with on the second frequency band is higher than the degree to which the first radar is interfered with on the first frequency band, wherein the first frequency band is selected as the next transmit frequency band and the interference information on the first frequency band is obtained; and
a determining unit (602), configured to determine first transmission duration of the first radar on the first frequency band based on the interference information on the first frequency band, wherein the interference information on the first frequency band is used to indicate a difference between the first transmission duration and initial transmission duration of the first radar, or the interference information on the first frequency band is used to indicate the first transmission duration.

7. The apparatus according to claim 6, wherein the obtaining unit (601) is further configured to perform interference detection on the first frequency band to obtain the interference information; or the obtaining unit (601) specifically comprises:
a receiving unit (603), configured to receive the interference information, wherein the interference information is from at least one second apparatus, and the second apparatus comprises a second radar or a roadside unit.

8. The apparatus according to claim 6 or 7, wherein the interference information belongs to a first interference range in a plurality of interference ranges, and the plurality of interference ranges are defined by using at least one interference threshold.

9. The apparatus according to claim 8, wherein the at least one interference threshold is predefined or preconfigured.

10. A control apparatus (60, 70, 80, 901), comprising:
a sending unit (701), configured to send interference information to a first apparatus, wherein the interference information comprises first information used to represent a degree to which the first apparatus is interfered with on a first frequency band, the interference information further comprises a quantity of radars (902) that are interfered with on the first frequency band, **characterized in that** the interference information further comprises second information used to represent a degree to which the first apparatus is interfered with by another radar (902) on a second frequency band, and the degree to which the first apparatus is interfered with on the second frequency band is higher than the degree to which the first apparatus is interfered with in the first frequency band.

## Patentansprüche

1. Übertragungssteuerungsverfahren, umfassend:
Erlangen von Störungsinformationen, wobei die Störungsinformationen erste Informationen umfassen, die verwendet werden, um einen Grad darzustellen, bis zu dem ein erstes Radar auf einem ersten Frequenzband gestört wird, und die Störungsinformationen ferner eine Menge von Radaren (902) umfassen, die auf dem ersten Frequenzband gestört wird, **dadurch gekennzeichnet, dass**
die Störungsinformationen ferner zweite Informationen umfassen, die verwendet werden, um einen Grad darzustellen, bis zu dem das erste Radar von einem anderen Radar (902) auf einem zweiten Frequenzband gestört wird, und wobei der Grad, bis zu dem das erste Radar auf dem zweiten Frequenzband gestört wird, höher als der Grad ist, bis zu dem das erste Radar auf dem ersten Frequenzband gestört wird;
Auswählen des ersten Frequenzbandes als das nächste Sendefrequenzband;
Erlangen der Störungsinformationen auf dem ersten Frequenzband und
Bestimmen einer ersten Übertragungsdauer des ersten Radars auf dem ersten Frequenzband basierend auf den Störungsinformationen auf dem ersten Frequenzband, wobei die Störungsinformationen auf dem ersten Frequenzband verwendet werden, um eine Differenz zwischen der ersten Übertragungsdauer und einer anfänglichen Übertragungsdauer des ersten Radars anzugeben, oder die Störungsinformationen auf dem ersten Frequenzband verwendet werden, um die erste Übertragungsdauer anzugeben.

2. Verfahren nach Anspruch 1, wobei das Erlangen von Störungsinformationen Folgendes umfasst:
Durchführen von Störungserkennung auf dem ersten Frequenzband, um die Störungsinformationen zu erlangen; oder
Empfangen der Störungsinformationen, wobei die Störungsinformationen von mindestens einer zweiten Vorrichtung sind und die zweite Vorrichtung ein zweites Radar oder eine Einheit am Straßenrand umfasst.

3. Verfahren nach Anspruch 1 oder 2, wobei die Störungsinformationen zu einem ersten Störbereich in einer Mehrzahl von Störbereichen gehören und die Mehrzahl von Störbereichen durch Verwenden mindestens eines Störungsschwellenwerts definiert wird.

4. Verfahren nach Anspruch 3, wobei der mindestens eine Störungsschwellenwert vordefiniert oder vorkonfiguriert wird.

5. Übertragungssteuerungsverfahren, umfassend:
Senden von Störungsinformationen an eine erste Vorrichtung, wobei die Störungsinformationen erste Informationen umfassen, die verwendet werden, um einen Grad darzustellen, bis zu dem die erste Vorrichtung auf einem ersten Frequenzband gestört wird, wobei die Störungsinformationen ferner eine Menge von Radaren (902) umfassen, die auf dem ersten Frequenzband gestört wird, **dadurch gekennzeichnet, dass**
die Störungsinformationen ferner zweite Informationen umfassen, die verwendet werden, um einen Grad darzustellen, bis zu dem das erste Radar von einem anderen Radar (902) auf einem zweiten Frequenzband gestört wird, wobei der Grad, bis zu dem das erste Radar auf dem zweiten Frequenzband gestört wird, höher als der Grad ist, bis zu dem das erste Radar auf dem ersten Frequenzband gestört wird, wobei das erste Frequenzband als das nächste Sendefrequenzband ausgewählt wird und die Störungsinformationen auf dem ersten Frequenzband erlangt werden;
und die Störungsinformationen auf dem ersten Frequenzband von der ersten Vorrichtung verwendet werden, um eine erste Übertragungsdauer auf dem ersten Frequenzband zu bestimmen.

6. Steuervorrichtung (60, 70, 80, 901), umfassend:
eine Erlangungseinheit (601), die zum Erlangen von Störungsinformationen ausgelegt ist, wobei die Störungsinformationen verwendet werden, um erste Informationen eines Grades darzustellen, bis zu dem ein erstes Radar auf einem ersten Frequenzband gestört wird, und die Störungsinformationen eine Menge von Radaren (902) umfassen, die auf dem ersten Frequenzband gestört wird, **dadurch gekennzeichnet, dass**
die Störungsinformationen ferner zweite Informationen umfassen, die verwendet werden, um einen Grad darzustellen, bis zu dem das erste Radar von einem anderen Radar (902) auf einem zweiten Frequenzband gestört wird, und wobei der Grad, bis zu dem das erste Radar auf dem zweiten Frequenzband gestört wird, höher als der Grad ist, bis zu dem das erste Radar auf dem ersten Frequenzband gestört wird, wobei das erste Frequenzband als das nächste Sendefrequenzband ausgewählt wird und die Störungsinformationen auf dem ersten Frequenzband erlangt werden; und
eine Bestimmungseinheit (602), die zum Bestimmen einer ersten Übertragungsdauer des ersten Radars auf dem ersten Frequenzband basierend auf den Störungsinformationen auf dem ersten Frequenzband ausgelegt ist, wobei die Störungsinformationen auf dem ersten Frequenzband verwendet werden, um eine Differenz zwischen der ersten Übertragungsdauer und einer anfänglichen Übertragungsdauer des ersten Radars anzugeben, oder die Störungsinformationen auf dem ersten Frequenzband verwendet werden, um die erste Übertragungsdauer anzugeben.

7. Vorrichtung nach Anspruch 6, wobei die Erlangungseinheit (601) ferner zum Durchführen von Störungserkennung auf dem ersten Frequenzband ausgelegt ist, um die Störungsinformationen zu erlangen; oder die Erlangungseinheit (601) insbesondere Folgendes umfasst:
eine Empfangseinheit (603), die zum Empfangen der Störungsinformationen ausgelegt ist, wobei die Störungsinformationen von mindestens einer zweiten Vorrichtung sind und die zweite Vorrichtung ein zweites Radar oder eine Einheit am Straßenrand umfasst.

8. Vorrichtung nach Anspruch 6 oder 7, wobei die Störungsinformationen zu einem ersten Störbereich in einer Mehrzahl von Störbereichen gehören und die Mehrzahl von Störbereichen durch Verwenden mindestens eines Störungsschwellenwerts definiert wird.

9. Vorrichtung nach Anspruch 8, wobei der mindestens eine Störungsschwellenwert vordefiniert oder vorkonfiguriert wird.

10. Steuervorrichtung (60, 70, 80, 901), umfassend:
eine Sendeeinheit (701), die zum Senden von Störungsinformationen an eine erste Vorrichtung ausgelegt ist, wobei die Störungsinformationen erste Informationen umfassen, die verwendet werden, um einen Grad darzustellen, bis zu dem die erste Vorrichtung auf einem ersten Frequenzband gestört wird, wobei die Störungsinformationen ferner eine Menge von Radaren (902) umfassen, die auf dem ersten Frequenzband gestört wird, **dadurch gekennzeichnet, dass** die Störungsinformationen ferner zweite Informationen umfassen, die verwendet werden, um einen Grad darzustellen, bis zu dem die erste Vorrichtung von einem anderen Radar (902) auf einem zweiten Frequenzband gestört wird, und wobei der Grad, bis zu dem die erste Vorrichtung auf dem zweiten Frequenzband gestört wird, höher als der Grad ist, bis zu dem die erste Vorrichtung auf dem ersten Frequenzband gestört wird.

## Revendications

1. Procédé de commande de transmission, comprenant l'étape consistant à :
obtenir une information d'interférence, l'information d'interférence comprenant une première information servant à représenter un degré auquel un premier radar subit une interférence sur une première bande de fréquences, et l'information d'interférence comprenant également une quantité de radars (902) qui subissent une interférence sur la première bande de fréquences, **caractérisé en ce que**
l'information d'interférence comprend également une deuxième information servant à représenter un degré auquel le premier radar subit une interférence de la part d'un autre radar (902) sur une deuxième bande de fréquences, et le degré auquel le premier radar subit une interférence sur la deuxième bande de fréquences est supérieur au degré auquel le premier radar subit une interférence sur la première bande de fréquences ;
choisir la première bande de fréquences comme prochaine bande de fréquences de transmission ;
obtenir l'information d'interférence sur la première bande de fréquences, et
déterminer une première durée de transmission du premier radar sur la première bande de fréquences sur la base de l'information d'interférence sur la première bande de fréquences, l'information d'interférence sur la première bande de fréquences servant à indiquer une différence entre la première durée de transmission et une durée de transmission initiale du premier radar, ou l'information d'interférence sur la première bande de fréquences servant à indiquer la première durée de transmission.

2. Procédé selon la revendication 1, dans lequel l'obtention de l'information d'interférence comprend les étapes consistant à :
effectuer une détection d'interférence sur la première bande de fréquences pour obtenir l'information d'interférence ; ou
recevoir l'information d'interférence, l'information d'interférence provenant d'au moins un deuxième appareil, et le deuxième appareil comprenant un deuxième radar ou une unité en bord de route.

3. Procédé selon la revendication 1 ou 2, dans lequel l'information d'interférence appartient à une première plage d'interférences d'une pluralité de plages d'interférences, et la pluralité de plages d'interférences est définie au moyen d'au moins un seuil d'interférence.

4. Procédé selon la revendication 3, dans lequel l'au moins un seuil d'interférence est prédéfini ou préconfiguré.

5. Procédé de commande de transmission, comprenant l'étape consistant à :
envoyer une information d'interférence à un premier appareil, l'information d'interférence comprenant une première information servant à représenter un degré auquel le premier appareil subit une interférence sur une première bande de fréquences, l'information d'interférence comprenant également une quantité de radars (902) qui subissent une interférence sur la première bande de fréquences,
**caractérisé en ce que**
l'information d'interférence comprend également une deuxième information servant à représenter un degré auquel le premier radar subit une interférence de la part d'un autre radar (902) sur une deuxième bande de fréquences, le degré auquel le premier radar subit une interférence sur la deuxième bande de fréquences est supérieur au degré auquel le premier radar subit une interférence sur la première bande de fréquences, la première bande de fréquences étant choisie comme prochaine bande de fréquences de transmission et l'information d'interférence sur la première bande de fréquences étant obtenue ;
et l'information d'interférence sur la première bande de fréquences est utilisée par le premier appareil pour déterminer une première durée de transmission sur la première bande de fréquences.

6. Appareil de commande (60, 70, 80, 901), comprenant :
une unité d'obtention (601), configurée pour obtenir une information d'interférence, l'information d'interférence servant à représenter une première information d'un degré auquel un premier radar subit une interférence sur une première bande de fréquences, et l'information d'interférence comprenant une quantité de radars (902) qui subissent une interférence sur la première bande de fréquences, **caractérisé en ce que**
l'information d'interférence comprend également une deuxième information servant à représenter un degré auquel le premier radar subit une interférence de la part d'un autre radar (902) sur une deuxième bande de fréquences, et le degré auquel le premier radar subit une interférence sur la deuxième bande de fréquences est supérieur au degré auquel le premier radar subit une interférence sur la première bande de fréquences, la première bande de fréquences étant choisie comme prochaine bande de fréquences de transmission et l'information d'interférence sur la première bande de fréquences étant obtenue ; et
une unité de détermination (602), configurée pour déterminer une première durée de transmission du premier radar sur la première bande de fréquences sur la base de l'information d'interférence sur la première bande de fréquences, l'information d'interférence sur la première bande de fréquences servant à indiquer une différence entre la première durée de transmission et une durée de transmission initiale du premier radar, ou l'information d'interférence sur la première bande de fréquences servant à indiquer la première durée de transmission.

7. Appareil selon la revendication 6, dans lequel l'unité d'obtention (601) est également configurée pour effectuer une détection d'interférence sur la première bande de fréquences pour obtenir l'information d'interférence ; ou l'unité d'obtention (601) comprend spécifiquement :
une unité de réception (603), configurée pour recevoir l'information d'interférence, l'information d'interférence provenant d'au moins un deuxième appareil, et le deuxième appareil comprenant un deuxième radar ou une unité en bord de route.

8. Appareil selon la revendication 6 ou 7, dans lequel l'information d'interférence appartient à une première plage d'interférences d'une pluralité de plages d'interférences, et la pluralité de plages d'interférences est définie au moyen d'au moins un seuil d'interférence.

9. Appareil selon la revendication 8, dans lequel l'au moins un seuil d'interférence est prédéfini ou préconfiguré.

10. Appareil de commande (60, 70, 80, 901), comprenant :
une unité d'envoi (701), configurée pour envoyer une information d'interférence à un premier appareil, l'information d'interférence comprenant une première information servant à représenter un degré auquel le premier appareil subit une interférence sur une première bande de fréquences, l'information d'interférence comprenant également une quantité de radars (902) qui subissent une interférence sur la première bande de fréquences, **caractérisé en ce que**
l'information d'interférence comprend également une deuxième information servant à représenter un degré auquel le premier appareil subit une interférence de la part d'un autre radar (902) sur une deuxième bande de fréquences, et le degré auquel le premier radar subit une interférence sur la deuxième bande de fréquences est supérieur au degré auquel le premier appareil subit une interférence sur la première bande de fréquences.
